# EUROPEAN PATENT APPLICATION

(11) **EP 1 754 914 A1**
(43) Date of publication of application: **21.02.2007**
(21) Application number: 05380188.2
(22) Date of filing: 19.08.2005
(51) Int. Cl.: F16H 55/36, F16D 41/22

(54) **Alternator pulley**

(71) Applicant: Industrias Cántabras de Torneado S.R.L., 39600 Revilla de Camargo (Cantabria) (ES)
(72) Inventor: González González, Roberto, 39005 Santander (ES); Gutiérrez Malde, Lorenzo, 39005 Santander (ES); Cacho Sánchez, Jorge, 39005 Santander (ES); Gómez Otero, José, 39600 Revilla De Camargo (Cantabria) (ES); Gimeno Revuelta, Alfonso, 39600 Revilla De Camargo (Cantabria) (ES); González Gómez, Eusebio, 39600 Revilla De Camargo (Cantabria) (ES)
(74) Representative: Carvajal y Urquijo, Isabel

(57) **Abstract**

The invention relates to an alternator pulley, made up of a pulley (1), a pulley shaft (2) fixed to an alternator shaft, and first and second coupling means located between the pulley (1) and the shaft (2). Contact between these first and second coupling means is carried out by means of conical friction surfaces.

The first or second coupling means is threaded on the shaft (2) or the pulley (1) such that when the pulley (1) rotates, driven by a drive belt, the advance of said first or second coupling means towards the second or first coupling means occurs, obtaining that the shaft (2) rotates integrally with the pulley (1).

When the pulley (1) rotates at a lower speed than the shaft (2), the first and second coupling means separate, allowing the free rotation of the shaft (2).

## Description

### Object of the Invention

The present invention relates to an alternator pulley with a built-in non-rotating system located at one end of the alternator shaft for connection to a drive belt.

### Background of the Invention

Transmission between a vehicle motor shaft and alternator must allow the pulley to be coupled and decoupled from the alternator shaft according to the transmission and alternator shaft rotation speeds. It must particularly assure coupling of the pulley with the shaft in normal operating conditions of the engine-pulley-alternator, whereas it must assure decoupling in abnormal operating situations, such as:
- When the engine decelerates, the alternator is slowed down more slowly than the engine itself because of its own inertia, causing overloads on the pulley.
- In the event of abrupt braking of the engine, the inertia of the alternator itself may cause the alternator belt to come loose, with the subsequent damage this may cause for the engine.

There are currently pulleys providing a decoupling system, all of them being based on the models explained below.

First is the solution based on using the clutch or freewheel. This system is similar to a bearing but only allows rotation in one direction. There are two different models:
1. With ramps: the pulley has a series of elements (balls, rollers or needles) and an inner profile (it can be the outer diameter of the shaft or inner diameter of the pulley) with as many ramps as the number of elements. These elements rotate in an inner cavity when decoupling occurs (similar to a bearing), whereas when coupling occurs these elements act as wedges against the inner ramps, causing the shaft and pulley to rotate coupled together.
2. With wedges: in this case the outer profile of the shaft and inner profile of the pulley are circular, whereas they are the elements which, due to their special shape, enable both coupled and decoupled rotation.

On the other hand there is a solution based on a friction clutch. This system is made up of a coil spring fixed to the pulley shaft which is integrally joined to the alternator shaft, and arranged on this spring there is a friction member which is always in contact with the inner part of the pulley. When normal operation occurs, friction makes the spring open up, making the friction increase, enabling coupling between the pulley and shaft. When the engine slows down, the friction causes the spring to close, creating a reduction of friction and enabling the decoupling of the pulley and shaft.

The great drawback of these two solutions is their high cost, since the contact surfaces must be tempered and trued for their correct operation. The friction spring further has the problem of being strained by use, making the performance vary with time, loosing effectiveness.

As an example of freewheel pulleys, patent documents EP 0871281, EP 1028265 and DE 10151795 can be mentioned; whereas as an example of friction clutches there are patent documents US 6083130, EP 0517184 and US 5598913

### Description of the Invention

The present invention has as an object a pulley for transmitting power to an alternator that prevents both overloads and possible releases of the alternator belt, performing the coupling and decoupling automatically.

This system has as a great advantage the total cost of the pulley, since it is considerably reduced with respect to the freewheel or friction clutch system.

Furthermore its operation is better than that of the freewheel: in coupling, because it increases the contact surface assuring coupling; and in decoupling, because the friction that the elements (balls, rollers or needles) exert is eliminated, generating less heat.

The alternator pulley of the invention is driven by the drive belt in one rotation direction, transmitting said rotation to a pulley shaft through first coupling means and second coupling means. There is typically a bearing between the pulley and pulley shaft that supports the axial and radial loads. The pulley shaft is integrally joined to an alternator rotor shaft.

The first coupling means are located inside the pulley and in contact with said pulley through the outer surface of the first means. The inner surface of the first coupling means is conical, with a cone angle (measured between the cone axis and the generator) generally comprised between 5° and 80°, the cone angle will preferably be 10°. A first end of the first coupling means, which will be where the inner diameter is greater, and a second end of said first coupling means where the inner diameter is smaller, and therefore the section of the first coupling means greater, are thus defined.

The inner surface of the first coupling means is in contact with the outer surface of the second coupling means, which is conical, having an equal cone angle as that of the inner surface of the first coupling means so that contact is maximal. This taper defines a first end of the second coupling means where the outer diameter is smaller and a second end of the second coupling means where the outer diameter is greater.

Contact between both surfaces of both coupling means is assured by means of elastic elements.

The inner surface of the second coupling means is in contact with the shaft.

For coupling or decoupling, one of the coupling means must be separated from the opposite coupling means. This occurs by means of a thread which may be located in two areas:
o Between the pulley and the first coupling means if the first coupling means are to be those which move, in which case the second coupling means must rotate integrally with the shaft.
o Between the second coupling means and the shaft, in which case first coupling means must rotate integrally with the pulley.

Furthermore the direction of the thread is defined such that the moving coupling means advance towards the opposite coupling means when the pulley rotates, driven by the drive belt at a speed exceeding the remaining elements of the invention.

Therefore if the thread is made between the pulley and the first coupling means, the operating mechanism is as follows. When the pulley rotates at a speed exceeding that of the first coupling means, for example since it is in contact with the second coupling means which slow it down by friction, the first coupling means will advance on the thread towards the second coupling means until contact is maximal, and therefore the pulley drives the first coupling means by means of the friction produced in the thread, and drives the second coupling means and the shaft by means of friction.

When the engine is restrained or slowed down, the pulley will rotate at a lower speed than the remaining elements and in that instant the coupling means will separate since the first coupling means move backwards along the thread. The elastic elements prevent the separation from being complete.

In contrast, if the thread is located between the second coupling means and the shaft, when pulley rotation speed is accelerated, the first coupling means will be the ones that drive the second coupling means in the pulley rotation direction, whereas the shaft maintains its speed due to its inertia. The advance of the second coupling means towards the first coupling means, until contact is maximal and the friction with the thread drives the shaft, occurs due to this difference in angular velocity,.

In the instant in which the engine is restrained or slowed down, the slowing down of the pulley will cause the coupling means to rotate at a lower speed than the shaft and to separate as the first coupling means move backwards along the thread. The elastic elements will prevent the separation from being complete so that the process may begin again.

In preferred embodiments of the invention, the first coupling means comprise a ring-shaped bushing and the second coupling means comprise a conical element formed by a conical ring.

In other advantageous embodiments the elastic elements comprise a spring supported on the second end of the threaded coupling means, either the first or second coupling means, and a fixed element such as the bearing located between the shaft and pulley.

To facilitate assembly, an advantageous embodiment of the invention comprises a plurality of tubular sections having an increasing inner diameter on the inner surface of the pulley between a first end of the pulley where the shaft is introduced, and a second end where the assembly of the bearing is carried out, the first means having an outer diameter corresponding to the section of the pulley on which they are assembled.

A final advantageous embodiment comprises a series of covers preventing liquids or particles from entering the pulley. It may therefore have a first cover protecting the coupling means and located contiguous thereto, a rear cover on the first end of the pulley and an outer cover on the second end of the pulley.

### Brief Description of the Drawings

For the purpose of clarifying the detailed description of an embodiment, a drawing is attached allowing understanding of the basis of the present invention.

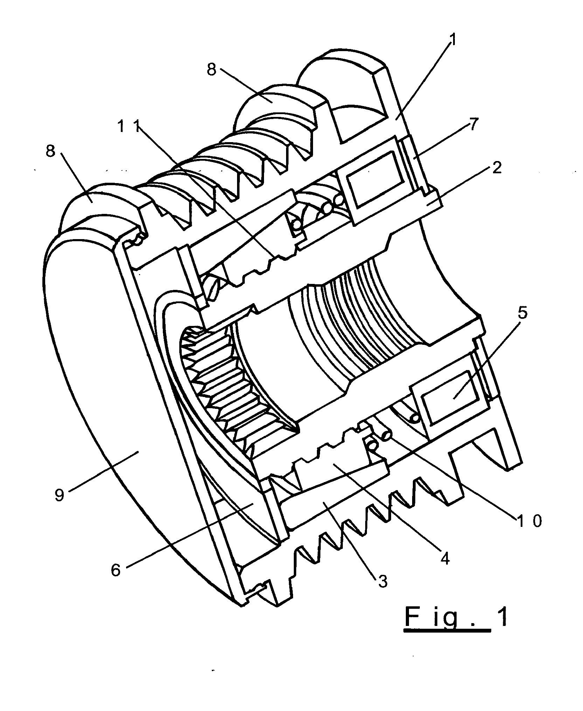

Figure 1 shows a longitudinal section of the alternator pulley of the invention.

### Description of an Embodiment

An embodiment of the invention will be very briefly described below as an illustrative and non-limiting example thereof.

Figure 1 shows a section of the alternator pulley of the invention, which shows the pulley (1) formed by a substantially cylindrical hollow part having outer guides (8) so that a drive belt (not shown) providing power from a motor shaft (not shown) may pass through them, making the pulley (1) rotate in a given rotation direction.

Fixed inside the pulley (1) are the first coupling means, which in the case shown comprise a ring-shaped bushing (3) the outer diameter of which is equal to the inner diameter of the pulley (1), whereas the inner diameter is variable, having a larger diameter on a first end of the bushing (3) than on a second end, and said diameter varying constantly along the length of the bushing (3).

This bushing (3) is located inside the pulley (1), preferably coinciding with the guides (8).

For its part, a first end of a pulley shaft (2) threaded on an alternator rotor shaft (not shown) is introduced at the end of the pulley (1) closest to the first end of the bushing (3), such that said first end of the pulley shaft (2) is located approximately at the height of the opposite end of the bushing (3).

A thread (11) must be made between a second coupling means and the shaft (2) or between the pulley (1) and the first coupling means. In the example represented, the thread (11) has been made near the first end of the shaft (2), said thread (11) being at the height of the bushing (3) when the shaft (2) is introduced inside the pulley (1).

The second coupling means, in this cased formed by a conical element (4), movable along the length of the thread (11) of the shaft (2), are located in said thread (11). This conical element (4) is formed by a ring internally threaded with the same pitch as the thread (11) of the shaft (2), and with a variable outer diameter. A first end, closer to the first end of the shaft (2), has a smaller outer diameter, whereas at a second end the outer diameter is greater.

The angle of the inner cone of the bushing (3) is equal to the angle of the outer cone of the conical element (4), therefore the conical element (4) fits perfectly into the bushing (3). This angle is calculated such that the distribution of stresses on the contact surface of the conical element (4) with the bushing (3) is suitable for allowing coupling and decoupling. To that end it will preferably have a value between 5° and 80°. It will preferably be about 10°.

The direction of the thread (11) of the shaft (2) and the conical element (4) is defined according to the first rotation direction of the alternator and the pulley (1), taking into account that said first rotation direction of the pulley (1) must correspond to the advance of the conical element (4) towards the bushing (3) along the thread (11) of the shaft (2).

Therefore when the pulley (1) rotates at a greater speed than the shaft (2), for example when movement begins or the engine accelerates, the bushing (3) integral with the pulley (1) will drive the conical element (4), by friction in its rotation, which element will advance along the thread (11) of the shaft (2), increasing contact with the bushing (3). When contact is maximum, the conical element (4) will stop in its axial advance along the shaft (2) forcing said shaft (2) to rotate integrally with the conical element. And given that contact is maximum, the bushing (3) and the conical element (4) rotate at the same angular velocity.

In the instant in which a braking or stopping situation of the engine occurs, the pulley (1) will reduce its speed. In turn the conical element (4) will restrain its rotation speed in accordance with the rotation speed of the bushing (3), whereas the shaft (2) will maintain its rotation speed due to the inertia of the alternator connected to it. Given the difference in angular velocity between the shaft (2) and the conical element (4), said conical element (4) will move backwards along the thread (11) of the shaft (2) causing a decoupling of the bushing (3) and the conical element (4). The pulley shaft (2) will thus continue rotating joined to the alternator shaft due to the inertia of said alternator and will be slowly restrained with the loss of energy produced by friction and the energy extracted by the alternator, but not due to the restraint that the pulley (1) may exert, since they are decoupled. It is thus prevented that the pulley (1) experiences overloads or that the drive belt comes out of the guides (8).

The shaft (2) is kept centered inside the pulley (1) by means of a bearing (5), allowing the relative rotation of the shaft (2) and pulley (1) at least in the decoupling direction. This bearing (5) further supports the axial and radial loads to which the shaft (2) and pulley (1) are subjected.

An elastic element, for example a spring (10), is supported on the bearing (5) and on the edge of the larger diameter of the conical element (4) to prevent the decoupling of said conical element (4) and the bushing (3) from being complete, given that in that case the recoupling between the shaft (2) and pulley (1) could not happen.

The alternator pulley (1) described offers the added advantage of the automatic compensation of the wear of the contact surface of the conical element (4) and the bushing (3). This occurs by making the conical element (4) advance along the thread (11) to a greater or lesser degree according to the wear of said parts.

A first cover (6), contiguous to the second end of the bushing (3) and formed by a washer, the outer diameter of which is equal to the inner diameter of the pulley, and the inner diameter of the pulley of the first cover (6) being somewhat less than the outer diameter of the shaft (2), can be fixed inside the pulley (1). The inner part of the first cover (6) is made of an elastic material offering little friction on one hand to allow assembly, and on the other to reduce friction of the shaft (2) with the first cover (6) when they rotate while decoupled.

According to other embodiments of the invention there is an outer cover (9) on the end of the pulley (1) through which the shaft (2) is not introduced, assuring the leak-tightness of the assembly, and especially assuring that particles or liquids affecting assembly operation do not enter the pulley.

Likewise, a rear cover (7) can be located at the other end of the pulley (1), the cover in this case formed by a washer, the inner diameter of which is slightly greater than the largest diameter of the shaft (2) to allow introducing said shaft (2) through the inner opening of the rear cover (7).

## Claims

1. An alternator pulley, of the type allowing coupling and decoupling between a pulley (1) driven by a drive belt in a rotation direction, and a pulley shaft (2) fixed to an alternator shaft, the shaft (2) and pulley (1) being connected by means of a bearing (5), **characterized in that** it comprises:
first coupling means in contact with the pulley (1), with a conical inner surface having a first end with a greater inner diameter and a second end with a smaller inner diameter and defining a cone angle;
second coupling means in contact with the shaft (2), with a conical outer surface having an equal cone angle as the first coupling means, having a first end with a smaller outer diameter, and a second end with a larger outer diameter; such that it fits perfectly in said first coupling means; and
a thread (11) located in an area selected from:
a first position between the outer surface of the first coupling means and the inner surface of the pulley (1), the direction of the thread (11) being defined such that it forces the first coupling means to advance towards the second coupling means when the pulley (1) rotates in the rotation direction; and where the second coupling means rotate integrally with the shaft (2); and
a second position between the inner surface of the second coupling means and a first end of the shaft (2), the direction of the thread (11) being defined such that it forces the second coupling means to advance towards the first coupling means when said second coupling means rotate in the rotation direction of the pulley (1); and where the first coupling means rotate integrally with the pulley (1); and
elastic elements assuring contact between the inner surface of the first coupling means and the outer surface of the second coupling means.

2. An alternator pulley according to any of claims 1, **characterized in that** the inner cone angle of the first coupling means and the outer cone angle of the second coupling means is comprised between 5° and 80°.

3. An alternator pulley according to any of claims 1 or 2, **characterized in that** the inner cone angle of the first coupling means and the outer cone angle of the second coupling means is 10°.

4. An alternator pulley according to any of claims 1 to 3, **characterized in that** the first coupling means comprise a ring-shaped bushing (3).

5. An alternator pulley according to any of claims 1 to 4, **characterized in that** the second coupling means comprise a conical element (4) formed by a conical ring.

6. An alternator pulley according to any of claims 1 to 3, **characterized in that** the elastic elements comprise a spring (10) supported on the bearing (5) and on the second end of the coupling means on which the thread (11) is made.

7. An alternator pulley according to any of claims 1 to 6, **characterized in that** the pulley (1) internally has a plurality of tubular sections having different inner diameters, the smallest inner diameter corresponding to a first end of the pulley (1) through which the shaft (2) is introduced in said pulley (1), and the inner diameters increasing according to the closeness of the section to a second end of the pulley (1), and **in that** the bearing (5) and the first coupling means have an outer diameter corresponding to the inner diameter of the section of the pulley (1) where they are fixed.

8. An alternator pulley according to claim 7, **characterized in that** it comprises a plurality of covers (6, 7, 9) to prevent liquids or particles from entering inside the pulley:
a first cover (6) inside the pulley (1) in a position contiguous to the first coupling means;
a rear cover (7) on the first end of the pulley (1) through which the shaft (2) is introduced in said pulley (1);
an outer cover (9) on the second end of the pulley (1).
